(19) Europäisches Patentamt
European Patent Office
Office européen des brevets

(11) Veröffentlichungsnummer: **0 332 934**
**A2**

(12) # EUROPÄISCHE PATENTANMELDUNG

(21) Anmeldenummer: **89103579.2**

(22) Anmeldetag: **01.03.89**

(51) Int. Cl.⁴: **G01N 27/12 , G01N 27/22**

(30) Priorität: **14.03.88 DE 3808470**
**14.03.88 DE 3808469**

(43) Veröffentlichungstag der Anmeldung:
**20.09.89 Patentblatt 89/38**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Dickert, Franz, Prof. Dr.**
**August-Euler-Weg 10**
**D-8500 Nürnberg(DE)**
Erfinder: **Mages, Gert, Dr.**
**Grabenäcker 5**
**D-8551 Hemhofen(DE)**
Erfinder: **Kimmel, Heinz, Dr.**
**Am Ruhstein 59**
**D-8520 Buckenhof(DE)**
Erfinder: **Schreiner, Sabine, Dipl.-Chem.**
**Geschwister-Scholl-Strasse 10**
**D-8520 Erlangen(DE)**

(54) **Anordnung zur Messung des Partialdruckes von Gasen oder Dämpfen.**

(57) Die Anordnung enthält einen Sensor mit einem chemosensitiven Sensormaterial, dessen elektrischer Widerstand oder dessen Dielektrizitätskonstante sich unter der Einwirkung der Gase oder Dämpfe ändert. Erfindungsgemäß dient als Widerstand oder Dielektrikum ein Sensormaterial, das entweder aus hydrophoben Metallkomplexen oder aus einem Gemisch aus mindestens einem Phthalid und mindestens einer sauren Verbindung besteht. Diese Sensorsysteme ändern unter Einwirkung der Gase ihre Ionenbeweglichkeit und/oder ihre Ionenkonzentration. Die Widerstandsänderung oder die Kapazitätsänderung kann zweckmäßig mit einem Multivibrator in eine Frequenzänderung umgesetzt werden. Damit erhält man ein besonders einfaches und sehr wirksames Sensorsystem für Gase und Dämpfe.

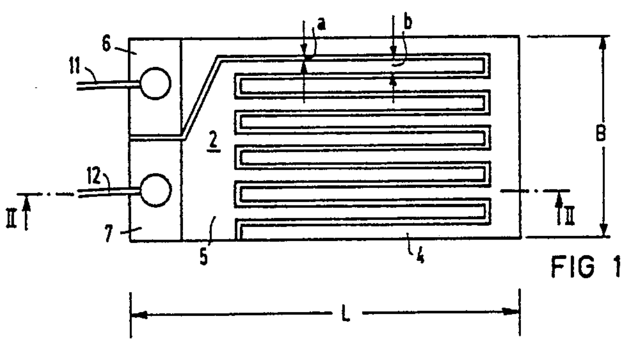


FIG 1

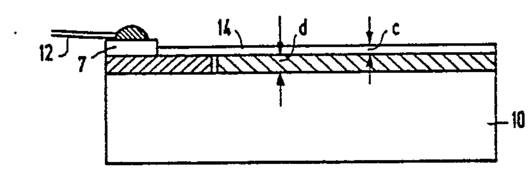


FIG 2

EP 0 332 934 A2

# Anordnung zur Messung des Partialdruckes von Gasen oder Dämpfen

Die Erfindung bezieht sich auf eine Anordnung zur kontinuierlichen Messung des Partialdruckes von Gasen oder Dämpfen mit einem chemosensitiven Sensormaterial, dessen elektrischer Widerstand oder dessen Dielektrizitätskonstante sich unter der Einwirkung des Gases ändert.

Es sind Sensoren zur Messung von Gasen und Dämpfen bekannt, die als Sensormaterial ein optisches Filter mit reversibler Farbänderung enthalten. Auch die Transparenz des Filters kann sich unter der Einwirkung der Gase ändern. Diese Filter enthalten ein Gemisch von einem basischen oder sauren Farbbildner oder Farbstoff und einer komplementären Verbindung. Als Farbbildner können beispielsweise Triphenylmethan-Systeme, insbesondere Kristallviolettlacton, vorgesehen sein. Ferner können sie Farbstoffe des Triphenylmethan-Systems, insbesondere Phthaleine oder Sulfophthaleine, enthalten und auch in eine Matrix eingebettet und zweckmäßig mit einem Träger versehen sein. Die Änderung der Transparenz des Filters unter der Einwirkung der Gase oder Dämpfe wird in ein elektrisches Signal umgesetzt und in einer Elektronik verarbeitet (DE-OS 35 06 686).

Aufgabe der Erfindung ist es, ein einfaches Sensorsystem für Gase oder Dämpfe anzugeben, das die kontinuierliche Messung des Partialdruckes bzw. der Konzentration praktisch aller Lösungsmittel und Gase auch bei niedrigen Temperaturen ermöglicht.

Es sind Metallkomplexe bekannt, deren Liganden hydrophobierende Eigenschaften besitzen. Zu dieser Substanzklasse gehören einzähnige Liganden, z.B. Dimethylformamid, zweizähnige Liganden, sog. Chelatliganden, z.B. Ethylendiamine und Acetylacetonate, Podanden und Makrocyclen, insbesondere Kronenether und Kryptanden.

Es ist auch bekannt, daß die Änderung der elektrischen Eigenschaften, beispielsweise die Änderung der Dielektrizitätskonstante oder der elektrischen Leitfähigkeit eines Sensormaterials zur Messung von Gasen oder Dämpfen herangezogen werden kann. In einfacher Weise läßt sich dieser Effekt beispielsweise mit einem Gassensor in der Form eines Kondensators zur Messung der Luftfeuchtigkeit ausnutzen. Das Wasser adsorbierende Dielektrikum wird auf Metallelektrode aufgebracht. Die zweite Elektrode des Kondensators wird in Form eines porösen, wasserdampfdurchlässigen Metallfilms auf das Dielektrikum aufgebracht. Die zweite Elektrode kann beispielsweise aus Gold bestehen und ist so dünn bzw. porös, daß das Wasser noch hindurchdiffundieren kann. Die elektrischen Kontakte können beispielsweise auch in der Form von zwei ineinandergreifenden Fingermustern ausgeführt sein. Über dieser sogenannten Kammstruktur wird ein Dielektrikum aufgebracht, das unter der Einwirkung eines Gases seine Dielektrizitätskonstante ändert. Die entsprechende Änderung der Kapazität dient dann als Sensorsignal (Sensorik, Springer-Verlag, Heidelberg, 1986, S. 195 -199).

Die Lösung der genannten Aufgabe besteht nun gemäß der Erfindung darin, daß als elektrischer Widerstand oder als Dielektrikum entweder ein hydrophober Metallkomplex oder ein Gemisch aus mindestens einem Phthalid und mindestens einer sauren Verbindung vorgesehen ist. Diese Sensormaterialien zeigen unter Einwirkung der Gase oder Dämpfe eine Änderung der Ionenkonzentration oder der Ionenbeweglichkeit. Mit dieser Ausführungsform erhält man ein Sensorsystem für Gase oder Dämpfe, das mit geringem Aufwand als kleines und leicht transportierbares Handgerät ausgeführt werden kann und das ohne besondere Kenntnisse den Nachweis von Gasen und Dämpfen an jedem beliebigen Ort auch bei Zimmertemperatur ermöglicht.

In einer bevorzugten Ausführungsform des Sensorsystems kann dem Sensor ein astabiler Multivibrator zugeordnet sein, der die Widerstandsänderung oder die Änderung der Dielektrizitätskonstante in eine Frequenzänderung umsetzt.

Die Sensorschicht besteht wenigstens teilweise aus makrocyclischen Metallkomplexen, insbesondere mit Liganden vom Typus Kronenether oder Cryptanden. Als Liganden können beispielsweise §-Benzo 15 Krone-5 oder auch §-Benzo-Cryptanden, beispielsweise §-5,6-Benzo-4,7,13,16,21,24-hexaoxa-1,10-diazobicyclo-(8,8,8)-hexacosan gewählt werden, die unter der Bezeichnung §-$222_B$ bekannt sind.

Die Metallkomplexe können vorzugsweise einen polymeren Kronenether oder Kryptanden enthalten, der an einem Metallion mit variabler Ladung koordiniert, beispielsweise an einem Natriumion $Na^+$ oder einem Kaliumion $K^+$ oder einem Magnesiumion $Mg^{++}$.

Besonders geeignet sind polymere Strukturen, aus denen stabile Schichten hergestellt werden können.

Ferner geeignet sind makrocyclische Metallkomplexe mit Gegenionen variabler Nukleophilie, beispielsweise Chloridanionen $Cl^-$ oder Perchloratanionen $ClO_4^-$.

Geeignete Cosubstanzen sind Verbindungen, die zur Anionen- oder Kationensolvatation geeignet sind und somit positiv oder negativ geladene Teilchen stabilisieren können. Dies können beispielsweise feste oder auch polyfunktionelle Alkohole sein; besonders geeignet ist Pyrogallol oder veretherte Polyethylenglykole.

Ferner geeignet sind Phthalide, vorzugsweise substituierte Phthalide, beispielsweise 3-(N-Methyl-3-indolyl)-6-dimethylaminophthalid, sowie 3,3-Diphenylphthalide, beispielsweise 3,3-Bis(p-dimethylaminophenyl)-6-dimethylaminophthalid, das unter der Bezeichnung Kristallviolettlacton bekannt ist oder 3-(p-Dimethylaminophenyl)-3-(p-methoxyphenyl)-6-dimethylaminophthalid.

Als acide Cosubstanzen sind vorzugsweise phenolische Säuren, insbesondere 2,2-Bis(4-hydroxyphenyl)-propan, das unter der Bezeichnung "Bisphenol-A" im Handel ist, oder Hydroxy-(phenyl)-bis(p-hydroxyphenyl)-methan geeignet, das unter der Bezeichnung "Benzaurin" im Handel ist.

Als transparentes Trägermaterial sind Glas und Kunststoffe geeignet. Das sensoraktive Material kann auch in eine Matrix eingebettet werden, wozu anorganische und organische polymere Substanzen geeignet sind, wie beispielsweise Polyvinylchlorid, Silikone und Kollodium und vor allem auch Polymere mit aktiven funktionellen Gruppen, die zur Kationen- und Anionensolvatation geeignet sind.

Zur weiteren Erläuterung der Erfindung wird auf die Zeichnung Bezug genommen, in deren

Figur I eine Anordnung nach der Erfindung als Draufsicht schematisch veranschaulicht ist.

Figur 2 zeigt einen Schnitt durch den Sensor gemäß Figur 1.

In Figur 3 ist ein Multivibrator zur Umsetzung der Änderung des Sensor-Ausgangssignals in eine entsprechende Frequenzänderung dargestellt.

Die Figuren 4 und 5 zeigen eine Kennlinie für die Widerstandsänderung bzw. für die Kapazitätsänderung jeweils in einem Diagramm.

In den Figuren 6 bis 8 ist jeweils eine Ausführungsform der Anordnung als Tauchsensor schematisch veranschaulicht.

In der Ausführungsform eines Gassensors 2 gemäß Figur 1 mit einer Länge L von beispielsweise etwa 40 mm und einer Breite B von beispielsweise etwa 8 mm sind zwei Elektroden 4 und 5 jeweils in der Form einer sogenannten Kammstruktur, deren Zähne ineinandergreifen, auf einem Substrat angeordnet, das in der Seitenansicht gemäß Figur 2 mit 10 bezeichnet ist und beispielsweise aus Glas bestehen kann. Die Elektroden 4 und 5 sind in ihren großflächigen Enden zum Anschluß elektrischer Leiter vorgesehen und können zu diesem Zweck mit zusätzlichen Metallauflagen 6 und 7 versehen sein, die beispielsweise aus Kupfer bestehen können. An diesen Metallauflagen wird jeweils ein elektrischer Anschlußleiter 11 bzw. 12 befestigt, beispielsweise angelötet. Die in der Figur nicht näher bezeichneten bandförmigen Zähne der Kammstruktur der beiden Elektroden sind in einem geringen Abstand a voneinander angeordnet, der beispielsweise etwa 10 bis 50 µm betragen kann. Die Breite b der bandförmigen Zähne kann beispielsweise etwa 100 bis 200 µm betragen.

Auf die Kammstruktur der beiden Elektroden 4 und 5, deren Dicke d gemäß Figur 2 beispielsweise etwa 0,5 µm betragen kann, wird eine vorbestimmte Menge einer das Sensormaterial enthaltenden Lösung aufgetropft und das Lösungsmittel verdampft. Dabei bildet sich eine zusammenhängende Sensorschicht, deren Dicke c mindestens so groß gewählt ist, daß eine Inselbildung vermieden wird. Ihre Dicke c wird deshalb vorzugsweise wenigstens 50 nm betragen und im allgemeinen 2 µm nicht wesentlich überschreiten. In Figur 2 ist auch die Metallauflage 7 mit ihrem Anschlußleiter 12 dargestellt. Die Änderung der Kapazität oder des Widerstandes der Sensorschicht 14 bei der Einwirkung eines Gases dient als Ausgangssignal für den Gassensor 2.

In einer besonderen Ausführungsform des Sensorsystems kann die Widerstandsänderung oder die Kapazitätsänderung der Sensorschicht 14 in eine Frequenzänderung umgesetzt werden. Zu diesem Zweck kann gemäß Figur 3 beispielsweise ein astabiler Multivibrator 20 vorgesehen sein, dessen Eingang E beispielsweise an eine Betriebsspannung $U_1$ = 5 V angeschlossen sein kann. Zur Messung der Kapazitätsänderung der Sensorschicht 14 des Sensors 2 werden die Anschlußleiter 11 und 12 des Sensors 2 an den Multivibrator angeschlossen; die Anschlußklemmen sind mit 22 und 23 bezeichnet. In dieser Ausführungsform mit Kapazitätsmessung wird zwischen weiteren Klemmen 24 und 25 ein Grundwiderstand 16 eingelegt. Durch die Änderung der Kapazität der Sensorschicht 14 des Sensors 2 erhält man am Ausgang A des Multivibrators 20 eine entsprechende Änderung der Frequenz der Ausgangsspannung $U_2$.

Mit der Ausführungsform einer Sensorschicht 14, deren Widerstandsänderung als Signal dient, wird zwischen den Klemmen 22 und 23 des Multivibrators 20 eine Grundkapazität angeschlossen und der Sensor 2 wird mit seinen Anschlußleitern 11 und 12 zwischen den Klemmen 24 und 25 angeschlossen.

In der Ausführungsform des Sensors 2 zur Widerstandsmessung kann beispielsweise als Sensorschicht 14 ein elektrisch gut leitender makrocyclischer Metallkomplex, beispielsweise ein Komplex aus Kaliumchlorid und einem polymeren Kronenether §-B[15] K-5, als Widerstandsmaterial aufgebracht werden. Zur Messung beispielsweise des Ethanolgehalts von Luft bei 50 % Feuchte erhält man dann am Ausgang A des Multivibrators 20 einen Frequenzverlauf gemäß der Kennlinie $K_1$ nach Figur 4, in der die Frequenz f in KHz über der

Ethanol-Konzentration $C_E$ in %o aufgetragen ist. Ein entsprechendes Meßinstrument wird dann gemäß der Kennlinie $K_1$ geeicht.

Zur Schaltung des Sensors 2 als Kapazität wird gemäß dem Diagramm der Figur 5, in dem die Frequenz in KHz des Multivibrators 20 in Abhängigkeit von der Acetonkonzentration $C_A$ in %o aufgetragen ist, als Sensorschicht 14 beispielsweise ein substituiertes 3.3-Diphenylphthalid gemäß folgender Darstellung

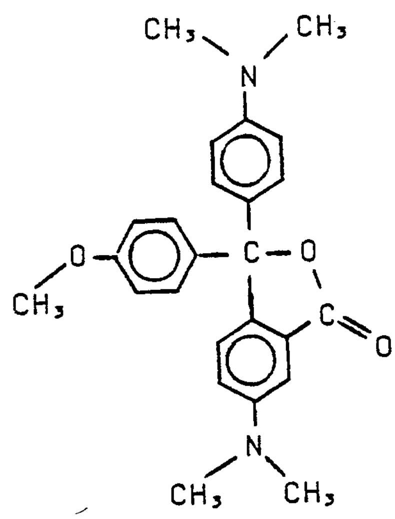

mit Bisphenol-A (1:4) als Cosubstanz verwendet. Dieses Gemisch zeigt einen verhältnismäßig hohen Widerstand und dient in der Meßanordnung als Dielektrikum. Mit dieser Ausführungsform erhält man beispielsweise zur Messung des Acetongehalts der Luft bei 50 % Feuchte eine Kennlinie $K_2$.

Das System mit der Baueinheit aus dem Sensor 2 und dem Multivibrator 20 kann gemäß Figur 6 auch als Tauchsensor ausgeführt sein. Es ist dann mit einem Behälter 26 versehen, dessen Wandung wenigstens teilweise aus einer gasdurchlässigen Membrane 28 besteht, die in der Figur gestrichelt angedeutet ist.

In der Ausführungsform eines optischen Tauchsensors gemäß Figur 7 in Lichtleitertechnik zum Nachweis von Gasen und Flüssigkeiten in Lösungen ist eine Lichtquelle mit 32, ein als Zuleitung dienender Lichtleiter mit 34 und ein als Rückleitung dienender Lichtleiter mit 35 und ein Empfänger mit 38 bezeichnet. Die Enden der beiden Lichtleiter 34 und 35 können beispielsweise ein gemeinsames Lichtleiterbündel 36 bilden, an dessen freier Stirnfläche ein Reflektor 30 befestigt ist. Dieser Reflektor enthält die Sensorschicht 14, die vorzugsweise mit einem Träger 42 versehen sein kann. Das Ende des Lichtleiterbündels 36 mit dem Reflektor 30 kann zweckmäßig mit einer als Membran dienenden Hülle 44 versehen sein.

Als Lichtquelle 32 kann beispielsweise eine Lumineszenzdiode (LED, light emission diode), vorzugsweise ein Laser, insbesondere ein gepulster Halbleiterlaser, vorgesehen sein. Die Lichtleiter 34 und 35 bestehen jeweils aus einem Bündel von Glasfasern, die am Ende zu einem gemeinsamen Glasfaserbündel 36 vereinigt sind, und von denen ein Teil zur Zuführung des Lichtstrahls und der übrige Teil zur Rückführung des reflektierten Lichts dient. Als Reflektor 30 kann vorzugsweise eine Schicht aus einem 3,3-Diphenylphthalid vorgesehen sein, deren Dicke beispielsweise etwa 0,1 bis 0,2 µm betragen kann. Als Träger 42 ist vorzugsweise eine Kunststoffolie, insbesondere eine Polyesterfolie, geeignet, deren Dicke beispielsweise etwa 100 µm betragen kann. Die Hülle 44 besteht aus einem Material, das die Diffusion des zu messenden Gases oder des Dampfes der zu messenden Flüssigkeit aus der Meßlösung 16 zum Reflektor 30 ermöglicht; diese Eigenschaft hat beispielsweise Tetrafluorethylen (Teflon).

In einer weiteren Ausführungsform des Sensors können die beiden Lichtleiter 34 und 35 gemäß Figur 6 auch derart nebeneinander angeordnet sein, daß die Stirnflächen an ihren Enden in einer Ebene liegen. An den beiden Stirnflächen ist ein als Reflektor 30 dienendes Prisma befestigt, das mit der Sensorschicht 14 versehen ist. Die in der Figur strichpunktiert angedeutete, im Lichtleiter 34 ankommende Strahlung 48 wird dann nach zweimaliger Reflexion an den Seitenflächen in den Lichtleiter 35 zurückgeleitet. Die reflektierte Lichtmenge ändert sich, wenn durch die Gaseinwirkung die Transparenz oder die Farbe des Reflektors 30 geändert wird.

Außerdem kann auch ein kegelförmiger Reflektor vorgesehen sein, an dessen Grundfläche die Stirnflächen der beiden Lichtleiter 34 und 35 derart befestigt werden, daß sie unmittelbar nebeneinanderliegen und dessen Mantel mit der Sensorschicht 14 versehen ist.

## Ansprüche

1. Anordnung zur kontinuierlichen Messung des Partialdruckes von Gasen oder Dämpfen mit einem chemosensitiven Sensormaterial, dessen elektrischer Widerstand oder dessen Dielektrizitätskonstante sich unter der Einwirkung des Gases oder Dampfes ändert, **dadurch gekennzeichnet,** daß als Widerstand oder als Dielektrikum ein Metallkomplex mit wenigstens einem hydrophobierenden Liganden oder ein Gemisch aus mindestens einem Phthalid mit mindestens einer sauren Komponente vorgesehen ist, dessen Ionenbeweglichkeit oder Ionenkonzentration sich unter Einwirkung der Gase oder Dämpfe ändert.

2. Anordnung nach Anspruch 1, **gekennzeichnet** durch einen Sensor, dem ein astabiler Multivibrator (20) zugeordnet ist, der die Widerstandsänderung oder die Änderung der Dielektrizitätskonstante in eine Änderung der Frequenz f umsetzt.

3. Anordnung nach Anspruch 1 oder 2, **dadurch gekennzeichnet,** daß das Sensormaterial macrocyclische Metallkomplexe enthält.

4. Anordnung nach Anspruch 3, **gekennzeichnet** durch Kronenether.

5. Anordnung nach Anspruch 4, **gekennzeichnet** durch §-Benzo[15]Krone-5.

6. Anordnung nach Anspruch 3, **gekennzeichnet** durch Kryptanden.

7. Anordnung nach Anspruch 6, **gekennzeichnet** durch §-Benzo-Kryptanden.

8. Anordnung nach Anspruch 7, **gekennzeichnet** durch §-$222_B$.

9. Anordnung nach einem der Ansprüche 1 bis 3, **dadurch gekennzeichnet,** daß das Sensormaterial Metallionen mit variabler Ladung enthält.

10. Anordnung nach Anspruch 9, **gekennzeichnet** durch ein Natriumion Na+ oder ein Kaliumion $K^+$ oder ein Magnesiumion $Mg^{++}$.

11. Anordnung nach einem der Ansprüche 1 bis 3, **dadurch gekennzeichnet,** daß das Sensormaterial Metallkomplexe mit Gegenionen variabler Nukleophilie enthält.

12. Anordnung nach Anspruch 11, **gekennzeichnet** durch Chloridanionen $Cl^-$ oder Perchloratanionen $ClO_4^-$.

13. Anordnung nach einem der Ansprüche 1 bis 12, **dadurch gekennzeichnet,** daß das Sensormaterial wenigstens eine protische Cosubstanz enthält.

14. Anordnung nach Anspruch 13, **gekennzeichnet** durch Pyrogallol.

15. Anordnung nach einem der Ansprüche 1 bis 12, **dadurch gekennzeichnet,** daß das Sensormaterial wenigstens eine aprotische Cosubstanz enthält.

16. Anordnung nach Anspruch 15, **gekennzeichnet** durch veretherte Polyethylenglykole.

17. Anordnung nach Anspruch 1 oder 2, **gekennzeichnet** durch ein substituiertes Phthalid.

18. Sensor nach Anspruch 17, **gekennzeichnet** durch 3-(N-Methyl-3-indolyl)-6-dimethylaminophthalid.

19. Sensor nach Anspruch 17, **gekennzeichnet** durch ein 3,3-Diphenylphthalid.

20. Sensor nach Anspruch 19, **gekennzeichnet** durch 3,3-Bis(p-dimethylaminophenyl)-6-dimethylaminophthalid.

21. Sensor nach Anspruch 19, **gekennzeichnet** durch 3-(p-Dimethylaminophenyl)-3-(p-methoxyphenyl)-6-dimethylaminophthalid.

22. Sensor nach Anspruch 1 oder 2, **gekennzeichnet** durch phenolische Säuren als saure Verbindung.

23. Sensor nach Anspruch 22, **gekennzeichnet** durch 2,2-Bis(4-hydroxyphenyl)-propan.

24. Sensor nach Anspruch 22, **gekennzeichnet** durch Hydroxy-(phenyl)-bis(p-hydroxyphenyl)-methan.

25. Anordnung nach einem der Ansprüche 1 bis 24, **dadurch gekennzeichnet,** daß das Sensormaterial in eine Matrixsubstanz eingebettet ist.

26. Anordnung nach einem der Ansprüche 1 bis 25, **dadurch gekennzeichnet,** daß das Sensormaterial auf einem Träger (10) angeordnet ist.

27. Anordnung nach einem der Ansprüche 1 bis 26, **gekennzeichnet** durch eine Ausführungsform als Tauchsensor mit einem Behälter 26, der mit einer gasdurchlässigen Membrane (28) versehen ist (Figur 4).

28. Sensor für Gase und Flüssigkeiten mit einem Reflektor, dessen Reflexionsvermögen sich unter der Einwirkung des Gases oder des Dampfes der Flüssigkeit ändert und der jeweils über einen Lichtleiter an eine Lichtquelle bzw. an einen Empfänger angeschlossen ist, nach Anspruch 27, **gekennzeichnet** durch folgende Gestaltungsmerkmale:

a) der Reflektor (10) besteht aus einem hydrophoben Metallkomplex oder aus einem Gemisch aus mindestens einem Phthalid und mindestens einer sauren Verbindung;

b) der Reflektor (10) bedeckt die freien Enden der Lichtleiter (4, 5);

c) die freien Stirnflächen sind in einer gemeinsamen Ebene angeordnet;

d) der Reflektor (10) und die Enden der Lichtleiter (4, 5) sind mit einer gasdurchlässigen Hülle (14) überzogen und zum Eintauchen in eine Meßlösung (16) vorgesehen, die das Gas oder die Flüssigkeit enthält.

29. Sensor nach Anspruch 28, **dadurch gekennzeichnet,** daß Glasfaser-Lichtleiter vorgesehen sind.

30. Sensor nach Anspruch 29, **gekennzeichnet** durch Glasfaserbündel.

31. Sensor nach Anspruch 30, **dadurch gekennzeichnet,** daß beide Lichtleiter an den Enden ein gemeinsames Lichtleiterbündel (6) bilden.

32. Sensor nach einem der Ansprüche 28 bis 30, **dadurch gekennzeichnet,** daß die Stirnflächen der Lichtleiter (4, 5) in einer Ebene nebeneinander angeordnet sind und an der Grundfläche eines Prismas befestigt sind, das als Reflektor (10) dient und der mit der Sensorschicht (11) versehen ist (Fig 2).

33. Sensor nach einem der Ansprüche 28 bis 30, **dadurch gekennzeichnet,** daß die Stirnflächen der Lichtleiter in einer Ebene nebeneinander angeordnet und an der Grundfläche eines Kegels befestigt sind, der als Reflektor dient und dessen Mantel mit der Sensorschicht (11) versehen ist.

P 8522 E

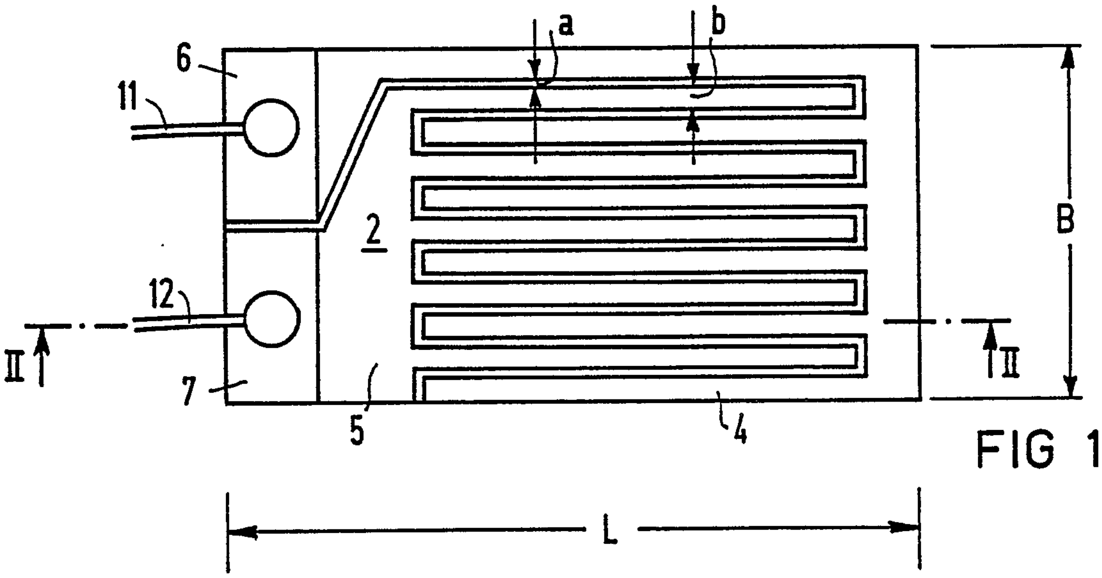


FIG 1

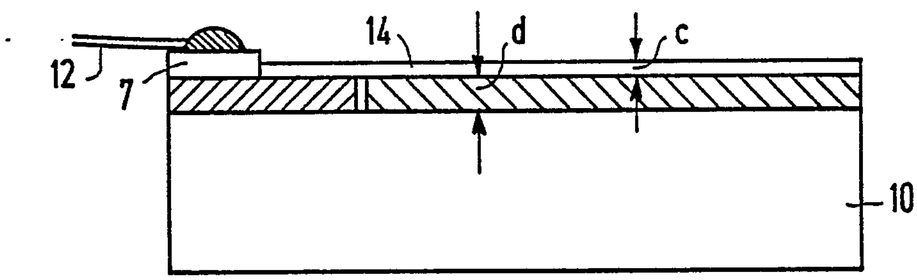


FIG 2

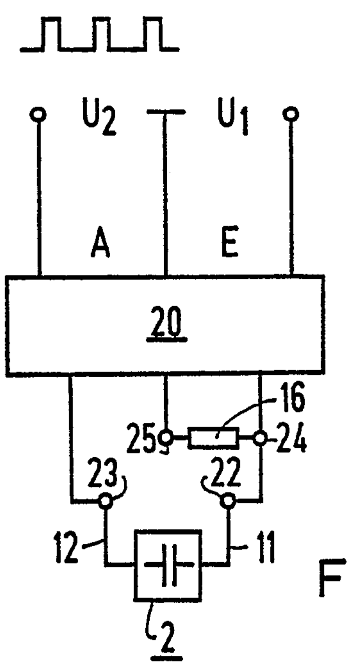


FIG 3

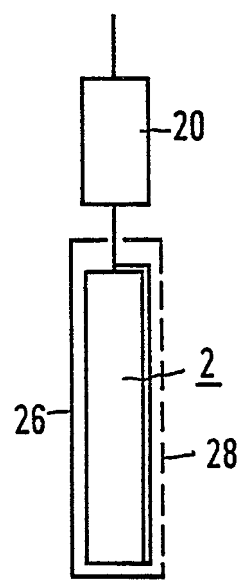


FIG 6

P 8522 E

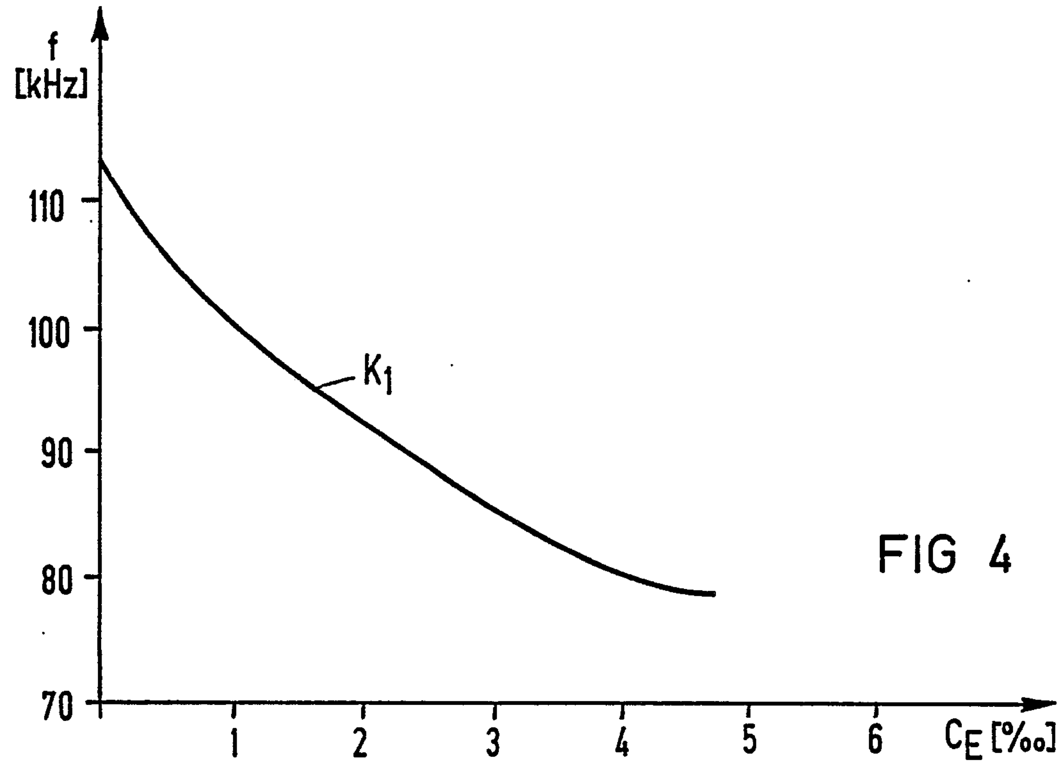


FIG 4

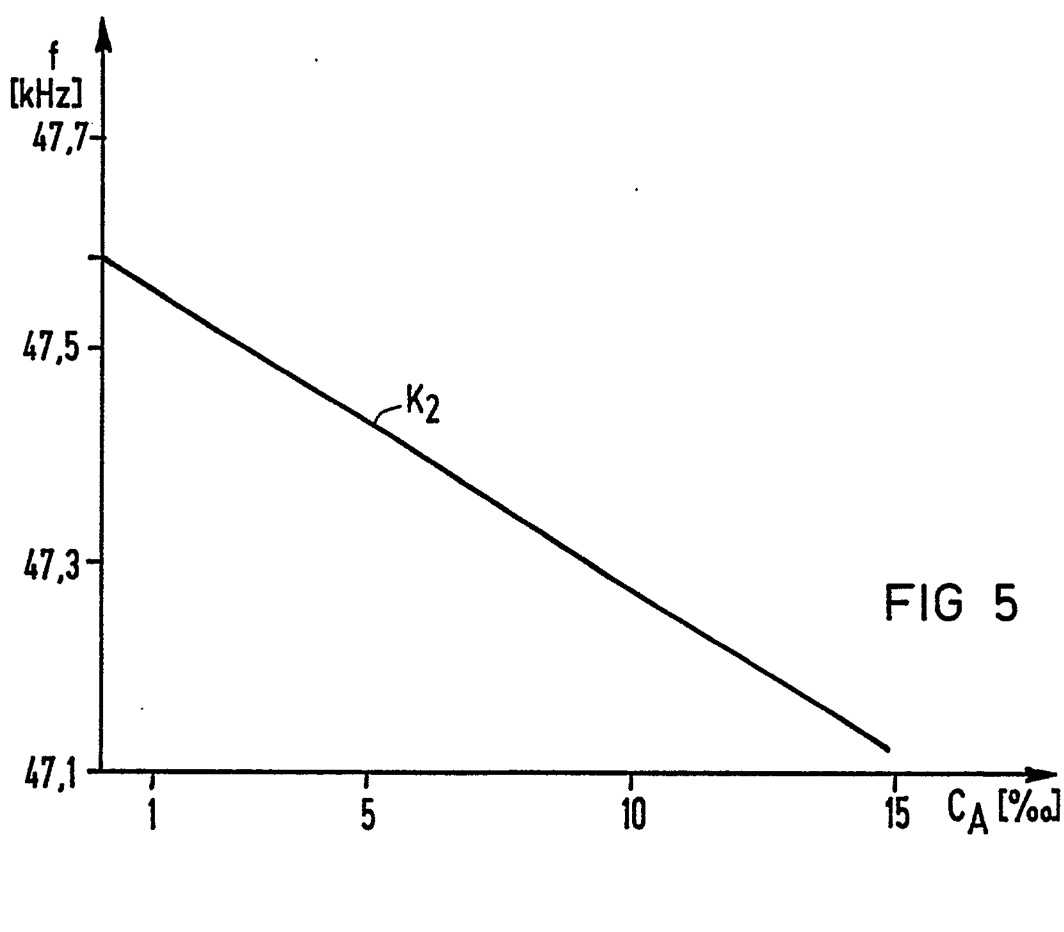


FIG 5

P 8522 E

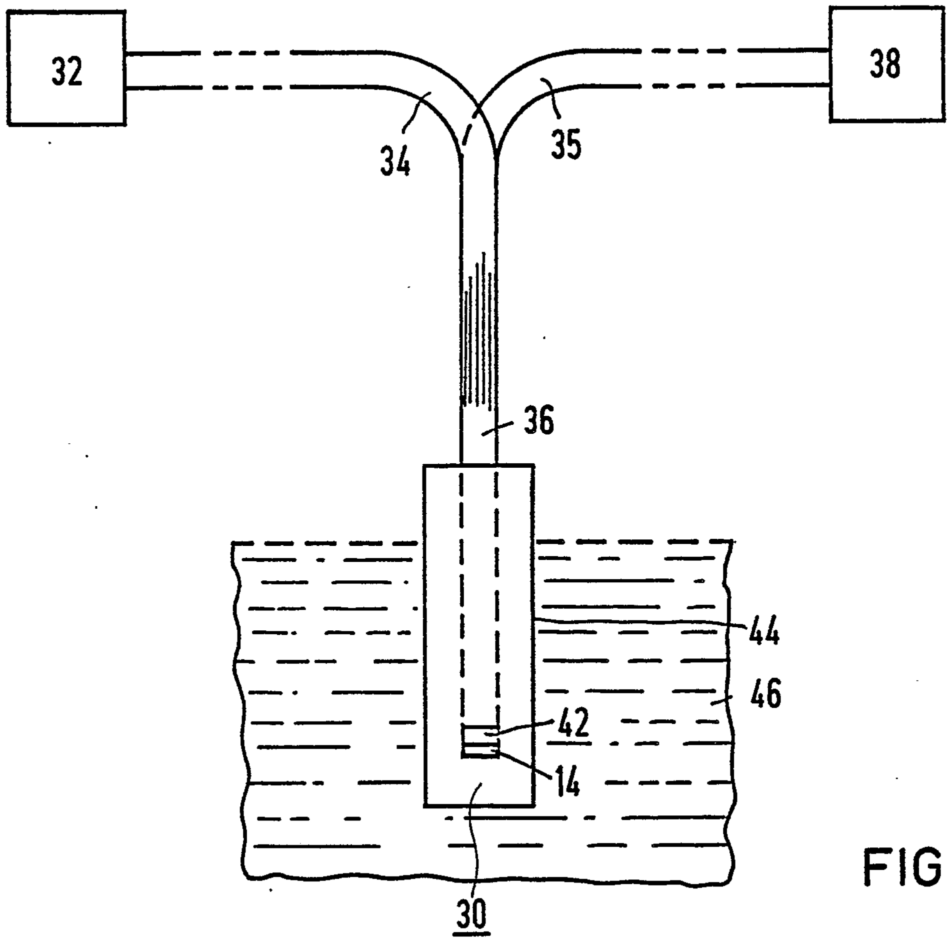


FIG 7

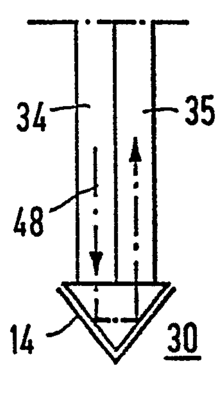


FIG 8